# EUROPÄISCHE PATENTSCHRIFT

(11) **EP 3 416 868 B1**
(45) Veröffentlichungstag und Bekanntmachung des Hinweises auf die Patenterteilung: **21.09.2022**
(21) Anmeldenummer: 17705616.5
(22) Anmeldetag: 16.02.2017
(51) Int. Cl.: B62B 5/06, B62B 3/14

(54) **TRANSPORTWAGEN**
TRANSPORT TROLLEY
CHARIOT DE TRANSPORT

(30) Priorität: 17.02.2016 DE 102016102739
(43) Veröffentlichungstag der Anmeldung: 26.12.2018
(73) Patentinhaber: Wanzl GmbH & Co. KGaA, 89336 Leipheim (DE)
(72) Erfinder: GASCHE, Thomas, 89340 Leipheim (DE); STÖCKLE, Dieter, 89361 Landensberg (DE); TATIC, Aleksandar, 89075 Ulm (DE)
(86) Internationale Anmeldenummer: PCT/EP2017/053495
(87) Internationale Veröffentlichungsnummer: WO 2017/140776

(56) Entgegenhaltungen:
- EP-A2- 2 781 428
- WO-A1-96/30247
- WO-A1-2012/042033
- DE-A1- 19 811 774
- DE-U1- 29 700 857

## Beschreibung

Die vorliegende Erfindung betrifft eine Schiebegriffeinheit zur Befestigung an einem von Hand beweglichen Transportwagen sowie einen derartigen Transportwagen.

Transportwagen, wie beispielsweise Einkaufswagen oder Transportwagen in Baumärkten, weisen Schiebegriffeinheiten auf, mittels derer der Transportwagen durch den Benutzer geschoben werden kann. So werden insbesondere im Einzelhandelsbereich derartige Transportwagen mit einer quer verlaufenden bzw. horizontal verlaufenden Griffstange versehen, mittels derer der Transportwagen geschoben werden kann.

Transportwagen für schwere und sperrige Güter, wie sie beispielsweise in einem Bau- oder Großmarkt zu finden sind, werden häufig mit aufragenden Griffen versehen. Diese erlauben es, eine natürliche Handhaltung beim Bewegen des schwerbeladenen Transportwagens einzunehmen.

Aus der WO 2012/042033 A1 ist bereits ein Schiebegriff für einen Transportwagen bekannt, der neben einer quer bzw. horizontal verlaufenden Querstange auch aufragende Griffteile zu beiden Enden des Schiebegriffs aufweist, wobei diese Griffteile drehbar um eine Befestigungsachse gelagert sind und auch in einer Position fixiert werden können.

Aus der EP 0 985 200 B1 ist bereits ein Handgriff mit einem Mittelstück und mit zwei an den Enden des Mittelstücks befestigbaren Endstücken bekannt, wobei die Endstücke eine Einrichtung zur Befestigung an einem Transportwagen, wie einem Einkaufswagen, aufweisen.

Wünschenswert wäre es, eine Schiebegriffeinheit für Transportwagen dahingehend weiterzubilden, dass der Benutzer seine Handhaltung variieren kann und sowohl eine vertikale als auch horizontale Griffmöglichkeit vorgesehen ist.

Es ist die Aufgabe der vorliegenden Erfindung, eine Schiebegriffeinheit sowie einen Transportwagen der eingangs genannten Art in vorteilhafter Weise weiterzubilden, insbesondere dahingehend, dass insbesondere die vertikale Griffmöglichkeit einer Schiebegriffeinheit verbessert und besser angepasst werden kann.

Diese Aufgabe wird erfindungsgemäß gelöst durch eine Schiebegriffeinheit mit den Merkmalen des Anspruchs 1.

Bei dem Transportwagen kann es sich beispielsweise um einen Einkaufswagen oder einen Transportwagen für Baumärkte handeln.

Die Erfindung basiert auf dem Grundgedanken, dass die im montierten Zustand freistehende, aufragende Greifeinheit, die eine vertikale Griffmöglichkeit für den Benutzer des Transportwagens bereitstellt, einfacher aufgebaut ist und bedarfsgerecht und auch entsprechend ergonomischen Bedürfnissen angepasst werden kann. Dies wird dadurch erreicht, dass die Greifeinheit wenigstens zweiteilig ausgeführt ist, so dass beispielsweise der Greifeinheiteinsatz bedarfsgerecht angepasst werden kann. Darüber hinaus kann der Greifeinheiteinsatz, beispielsweise bei Beschädigung, unproblematisch ausgetauscht und ersetzt werden. Dies kann dann auch erfolgen, ohne dass die Schiebegriffeinheit bzw. die Endstücke vollständig demontiert werden müssen.

Das Endstück, insbesondere die Greifeinheitaufnahme, aber auch der Greifeinheiteinsatz, können im Spritzgussverfahren hergestellt werden. Denkbar ist, entsprechend spritzgießbare Kunststoffe zu verwenden, die insbesondere schlagzäh ausgebildet sind. Denkbar ist hier insbesondere, faserverstärktes Polypropylen (PP) oder nicht faserverstärktes Polypropylen (PP) oder faserverstärktes oder nicht faserverstärktes Polyamid (PA) zu verwenden.

Für die Greifeinheit können unterschiedliche Formen gewählt werden. Denkbar sind beispielsweise runde bzw. abgerundete Greifeinheiten, die eine Griffmöglichkeit bieten, die an die Hände des Nutzers einer Schiebegriffeinheit angepasst sind.

Denkbar sind auch Mulden für Finger, Ablageflächen, Einsenkungen für den Daumen und entsprechende Ausbuchtungen, die an die Handform des Benutzers angepasst sind. So ist insbesondere denkbar, dass eine gesonderte Auflagefläche für den Handteller mit einer Ausbuchtung vorgesehen ist, die dann direkt auf der Handtellerinnenseite entsprechend aufliegen kann. Insgesamt soll eine ergonomische Anpassung erfolgen, wobei eine Gestaltung derart gewählt werden kann, dass sie sowohl für kleine als auch für große Hände passend ist und hierzu Höhe und Querschnitt entsprechend angepasst sind. Durch eine verbesserte Auflage der Hand und eine entsprechende ergonomische Ausgestaltung wird es auch möglich, einfacher Kräfte in die Greifeinheit einleiten zu können. Durch die verbesserte Auflagemöglichkeit der Hand auf der Greifeinheit wird es dem Benutzer erleichtert, auch einen schweren Einkaufswagen oder Transportwagen bewegen zu können.

Es ist vorgesehen, dass der Greifeinheiteinsatz in die Greifeinheitaufnahme einsetzbar ist. Hierdurch wird die Montage des Greifeinheiteinsatzes in der Greifeinheitaufnahme erleichtert. Denkbar ist insbesondere, dass Greifeinheiteinsatz und Greifeinheitaufnahme aneinander angepasst sind.

Es ist vorgesehen, dass der Greifeinheiteinsatz in der Greifeinheitaufnahme verrastbar ist. Durch eine Verrastung wird eine einfache Befestigung des Greifeinheiteinsatzes in der Greifeinheitaufnahme möglich. Insbesondere ist auch denkbar, dass die Verrastung beispielsweise werkzeuglos gelöst werden kann. Hierdurch wird es möglich, Greifeinheiteinsätze in unterschiedlicher Ausprägung in der Greifeinheitaufnahme einsetzen und entsprechend austauschen zu können.

Der Greifeinheiteinsatz kann zumindest abschnittsweise eine Aufsatzkante aufweisen. Die Aufsatzkante wiederum kann insbesondere an den Rand der Greifeinheitaufnahme angepasst sein. Hierdurch wird eine eindeutige Montagemöglichkeit für den Greifeinheiteinsatz bereitgestellt, was die Montage und insbesondere auch eine korrekte Montage ermöglicht.

Zudem ist vorstellbar, dass an dem Greifeinheiteinsatz eine Objekthalterung angeformt ist, insbesondere einstückig angeformt ist. Dadurch kann der Greifeinheiteinsatz mit der Objekthalterung einteilig, d.h. als ein Teil bzw. Bauteil ausgebildet sein. Aufgrund der einstückigen Anformung der Objekthalterung an den Greifeinheiteinsatz kann dessen gesamte strukturelle Stabilität einerseits erhöht werden. Die einstückige Anformung der Objekthalterung an dem Greifeinheiteinsatz kann auch als eine einteilige Anformung ausgestaltet sein.

Zusätzlich ist denkbar, dass die Objekthalterung als eine Halterung für jeweils wenigstens einen Getränkebecher und/oder einen Handscanner und/oder ein Handy und/oder ein Tablet bzw. Tablet-PC und/oder eine Lupe und/oder einen Einkaufszettel ausgebildet ist. Diese Ausbildung der Objekthalterung ermöglicht es den Nutzern des Transportwagens, dass die mit dem Transportwagen im Zusammenhang stehende Nutzung, z.B. Einkauf in Einzelhandelsfachgeschäften, spürbar vereinfacht bzw. angenehmer gestaltet wird. So kann durch das Vorsehen einer Lupe beispielsweise ein Kunde eines Einzelhandelsfachgeschäfts gewisse insbesondere kleingedruckte Informationen zu einem Produkt einfacher erkennen.

Weiterhin kann vorgesehen sein, dass die Objekthalterung als Haken und/oder Umlaufgriff und/oder Griffkappe ausgebildet ist. Diese Ausgestaltung der Objekthalterung bietet dem Nutzer des Transportwagens ebenfalls eine Vereinfachung im Umgang mit dem Transportwagen sowie den damit im Zusammenhang stehenden Tätigkeiten. Die Ausgestaltung als Haken beispielsweise bietet einem Verreisenden an einem Flughafen zusätzliche Möglichkeiten zur Verwahrung seiner Gepäckstücke.

Die Greifeinheit ist an dem einen Endstück einstückig ausgebildet. Ferner ist es vorstellbar, dass die Greifeinheit an dem anderen Endstück aus der Greifeinheitaufnahme und dem Greifeinheiteinsatz besteht, an dem die Objekthalterung angeformt ist, insbesondere einstückig angeformt ist. Die Objekthalterung lediglich an einer der beiden Greifeinheiten vorzusehen, stellt einen guten Kompromiss desjenigen Zielkonflikts dar, dem Nutzer des Transportwagens einerseits eine verbesserte Funktionalität (z.B. durch einen Becherhalter oder eine Lupe) zu gewährleisten, andererseits aber diesen durch die immer weiter steigende Funktionalitätsdichte des Transportwagens nicht zu überfordern sowie die zusätzlich anfallenden Mehrkosten nicht übermäßig zu steigern. Zudem lässt sich durch die einstückige Ausgestaltung zumindest einer Greifeinheit die strukturelle Stabilität bzw.

Steifigkeit der Schiebegriffeinheit erhöhen. Ebenfalls denkbar ist, dass die Greifeinheit an dem einen Endstück einteilig angeformt ist. Mit anderen Worten kann die einstückige Anformung der Objekthalterung an dem Greifeinheiteinsatz auch als eine einteilige Anformung ausgestaltet sein. Die Querstrebe kann ein Mittelstück und zwei durch das Mittelstück voneinander getrennte Griffabschnitte aufweisen. Das Mittelstück kann bestimmte Funktionen übernehmen und durch die Bereitstellung zweier Griffabschnitte kann eine einfache Handhabung der Schiebegriffeinheit ermöglicht werden.

Insbesondere kann vorgesehen sein, dass das Mittelstück ein Münzpfandsystem und/oder ein Darstellungsfeld aufweist. Eine derartige Konstruktion ist beispielsweise aus der EP 0 985 200 B1 bekannt.

Durch diese Ausgestaltung wird es auch weiter möglich, dass die Greifeinheiteinsätze auch erst nach einem Transport, beispielsweise der vormontierten Transportwagen und der Schiebegriffeinheit ohne die Greifeinheiteinsätze montiert werden können. Darüber hinaus ergeben sich weitere Möglichkeiten, Material, Farbe, haptische Eigenschaften, ergonomische Anpassungen, Möglichkeiten zur Statikvermeidung, der Reinigung sowie des Austauschs zu erleichtern bzw. zu schaffen.

Des Weiteren kann vorgesehen sein, dass jeder Griffabschnitt durch einen Vorsprung des Querstrebe und durch einen Vorsprung eines Endstücks ausgebildet ist. Dadurch wird erreicht, dass die Endstücke insgesamt stabiler ausgeführt werden können, da das Mittelstück nicht insgesamt den Griffabschnitt ausbilden muss und mit seinem freien Ende direkt am Endstück ansetzt. Vielmehr wird hierdurch erreicht, dass das Endstück mit seinem Vorsprung verhindert, dass es zu einer Kerbwirkung direkt am Endstück kommt.

Es ist vorgesehen, dass die Greifeinheitaufnahme und der Greifeinheiteinsatz im montierten Zustand zumindest teilweise formschlüssig ineinandergreifen. Dies erleichtert die Übertragung von Kräften durch Schieben und Ziehen an der Greifeinheit durch den Benutzer.

Das Endstück kann aus Kunststoff ausgebildet sein. Denkbar ist beispielsweise, hier Polypropylen (verstärkt oder unverstärkt) oder einen faserverstärkten Kunststoff oder faserverstärktes oder nicht faserverstärktes Polyamid (PA) zu benutzen. Grundsätzlich ist jegliche Art von Kunststoff, insbesondere schlagzäher Kunststoff geeignet. Durch die Ausbildung des Endstückes aus Kunststoff wird es möglich, eine kostengünstige Fertigung zu erreichen.

Die Greifeinheitaufnahme kann im Wesentlichen kelchartig ausgebildet sein. Dies erleichtert einen Einsatz des Greifeinheiteinsatzes in die Greifeinheitaufnahme hinein. Die Greifeinheitaufnahme und der Greifeinheiteinsatz können zumindest teilweise aus unterschiedlichen Materialien ausgebildet sein. Hierdurch wird es beispielsweise möglich, unterschiedliche Farben in Greifeinheitaufnahme bzw. Endstück auf der einen und Greifeinheiteinsatz auf der anderen Seite zu ermöglichen. Hierdurch wird es auch möglich, Antistatikmaßnahmen zu ereichen, so kann beispielsweise der Greifeinheiteinsatz aus antistatischen Materialien ausgeführt werden oder es kann eine Isolierschicht zwischen Greifeinheitaufnahme und Greifeinheiteinsatz vorgesehen sein. Des Weiteren ist es auch möglich, dass der Greifeinheiteinsatz teilweise zur Verbesserung der Grip-Eigenschaften mit Gummieinsätzen oder Silikoneinsätzen versehen ist.

Es ist vorgesehen, dass die Greifeinheit jeweils im montierten Zustand in Richtung der Querstrebe geneigt ist. Hierdurch wird es möglich, dass beim Schieben des Transportwagens die Hände des Schiebenden nicht außerhalb der Silhouette des Transportwagens sind, wodurch das Verletzungsrisiko für den Schiebenden verringert werden kann.

Das Endstück weist einen Ansatz auf, der in die Querstrebe einsetzbar ist. Hierdurch wird eine einfache und sichere Verbindung von Endstück und Querstrebe ermöglicht. Denkbar ist insbesondere, dass der Ansatz, der in die Querstrebe einsetzbar ist, formschlüssig in die Querstrebe eingreift.

Vorzugsweise kann der Ansatz eine Verdrehsicherung ausbilden. Hierdurch wird die Stabilität der Schiebegriffeinheit erhöht und gleichzeitig auch die Montage erleichtert.

Des Weiteren kann vorgesehen sein, dass eine Greifeinheit im montierten Zustand mit der Querstrebe einen Winkel im Bereich zwischen ca. 55° bis ca. 85°, insbesondere ca. 60° bis ca. 75° einschließt. Dieser Winkelbereich ist besonders günstig als ergonomische Ausgestaltung für einen idealen Angriffspunkt für den Benutzer in dem Moment, in dem mittels der Greifeinheit der Transportwagen geschoben werden soll. Ein Winkelbereich insbesondere zwischen ca. 60° bis ca. 75° ermöglicht es, die Hand des Benutzers auf der Greifeinheit derart zu führen, dass sie sich innerhalb der Silhouette des Transportwagens befindet und deshalb nicht herausragt und hierdurch vor Kollisionen geschützt ist.

Des Weiteren betrifft die vorliegende Erfindung einen von Hand beweglichen Transportwagen mit einer Schiebegriffeinheit wie vorstehend beschrieben. Bei dem Transportwagen kann es sich insbesondere um einen Einkaufswagen oder einen Transportwagen für Baumärkte handeln.

Weitere Einzelheiten und Vorteile der vorliegenden Erfindung sollen nun anhand eines in der Zeichnung dargestellten Ausführungsbeispiels näher erläutert werden.

Es zeigen:
- Fig. 1: eine perspektivische Ansicht auf ein Ausführungsbeispiel einer erfindungsgemäßen Schiebegriffeinheit;
- Fig. 2: eine perspektivische Detaildarstellung einer erfindungsgemäßen Schiebegriffeinheit;
- Fig. 3: eine perspektivische Darstellung auf einen Einkaufswagen mit der Schiebegriffeinheit gemäß Fig. 1;
- Fig. 4: eine perspektivische Ansicht auf ein weiteres Ausführungsbeispiel einer erfindungsgemäßen Schiebegriffeinheit;
- Fig. 5: eine perspektivische Frontansicht auf ein Ausführungsbeispiel einer erfindungsgemäßen Greifeinheit;
- Fig. 6: eine perspektivische Seitenansicht auf das Ausführungsbeispiel der Greifeinheit gemäß Fig. 5;
- Fig. 7: eine perspektivische Rückansicht auf das Ausführungsbeispiel der Greifeinheit gemäß Fig. 5;
- Fig. 8: eine perspektivische Oberansicht auf das Ausführungsbeispiel der Greifeinheit gemäß Fig. 5; und
- Fig. 9: eine perspektivische Unteransicht auf das Ausführungsbeispiel der Greifeinheit gemäß Fig. 5.

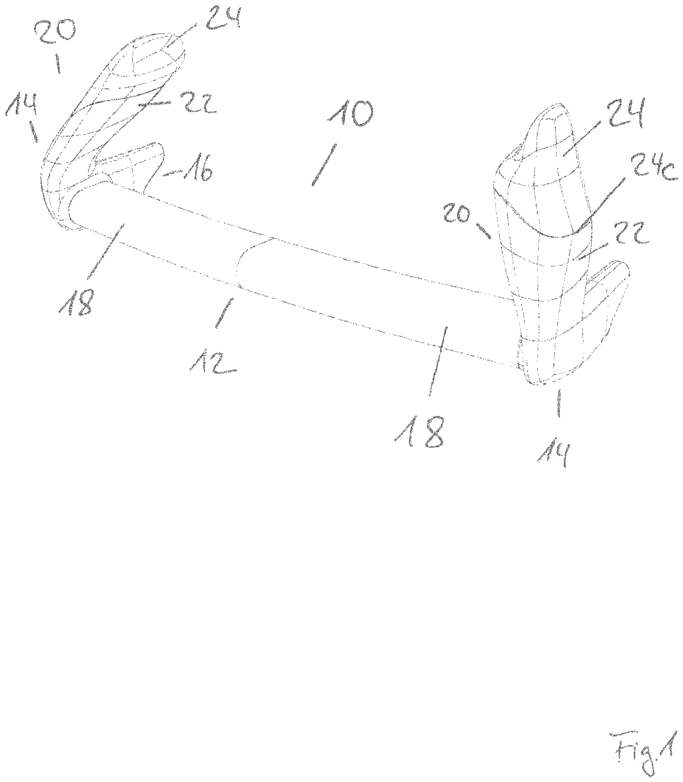

Fig. 1 zeigt in perspektivischer Darstellung ein Ausführungsbeispiel einer erfindungsgemäßen Schiebegriffeinheit 10.

Die Schiebegriffeinheit 10 weist eine Querstrebe 12 auf, die hier als Querstange ausgeführt ist.

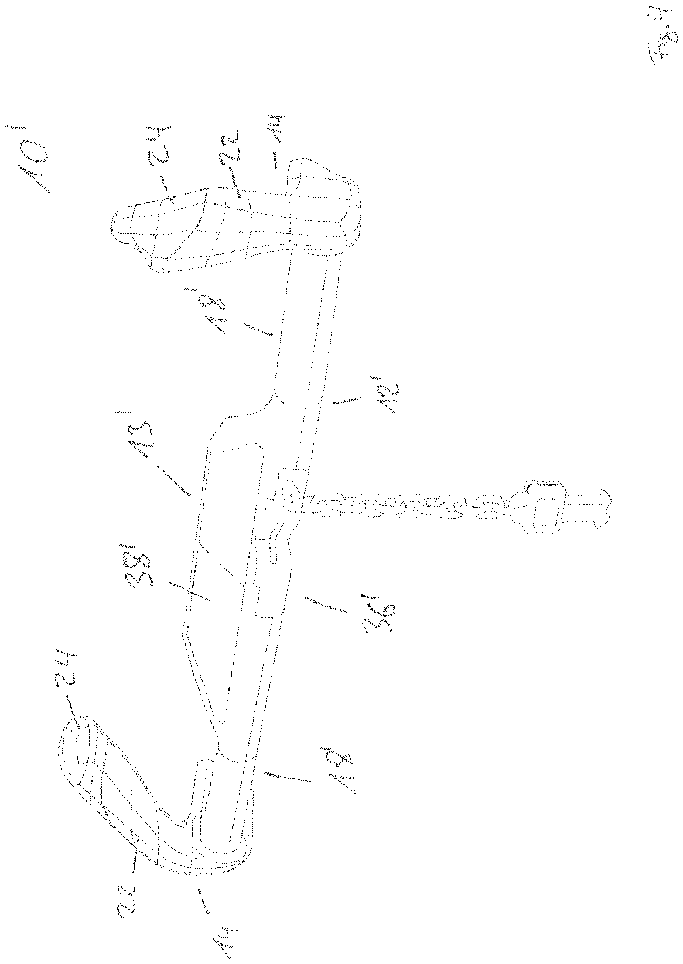

Die Querstrebe 12 kann aber auch ein Mittelstück 13' und zwei durch das Mittelstück 13' voneinander getrennte Griffabschnitte 18' aufweisen (siehe Fig. 4).

Die Querstrebe 12 kann aber auch ein Münzpfandsystem aufweisen, wie dies beispielsweise in der EP 0 985 200 B1 offenbart ist.

Im montierten Zustand, wie in Fig. 1 gezeigt, weist die Schiebegriffeinheit 10 weiter an den beiden Enden der Querstrebe 12 jeweils ein Endstück 14 auf, die spiegelverkehrt identisch aufgebaut sind.

Die Endstücke 14 weisen eine Einrichtung 16 zum Befestigen an einem von Hand beweglichen Transportwagen (nicht näher dargestellt) auf.

Bei einem derartigen Transportwagen kann es sich um einen Einkaufswagen oder Transportwagen für Baumärkte handeln.

Im Bereich der Enden der Querstrebe 12 sind jeweils zwei Griffabschnitte 18 vorgesehen, die im normalen Schiebebetrieb des Wagens die reguläre Griffposition einer den Wagen schiebenden Person darstellen.

Wie in Fig. 4 ersichtlich, sind zwei durch einen Abschnitt des Mittelstücks 13' getrennte Griffabschnitte 18' vorgesehen.

Die Schiebegriffeinheit 10 weist an den beiden Endstücken 14 jeweils freistehende, aufragende Greifeinheiten 20 auf. Jede Greifeinheit 20 ist dabei wenigstens aus einer Greifeinheitaufnahme 22 und einem Greifeinheiteinsatz 24 ausgebildet.

Die Greifeinheitaufnahmen 22 sind dabei jeweils an das zugehörige Endstück 14 angeformt.

Das Endstück 14 und die Greifeinheitaufnahme 22 sind dabei im gezeigten Ausführungsbeispiel einstückig ausgebildet.

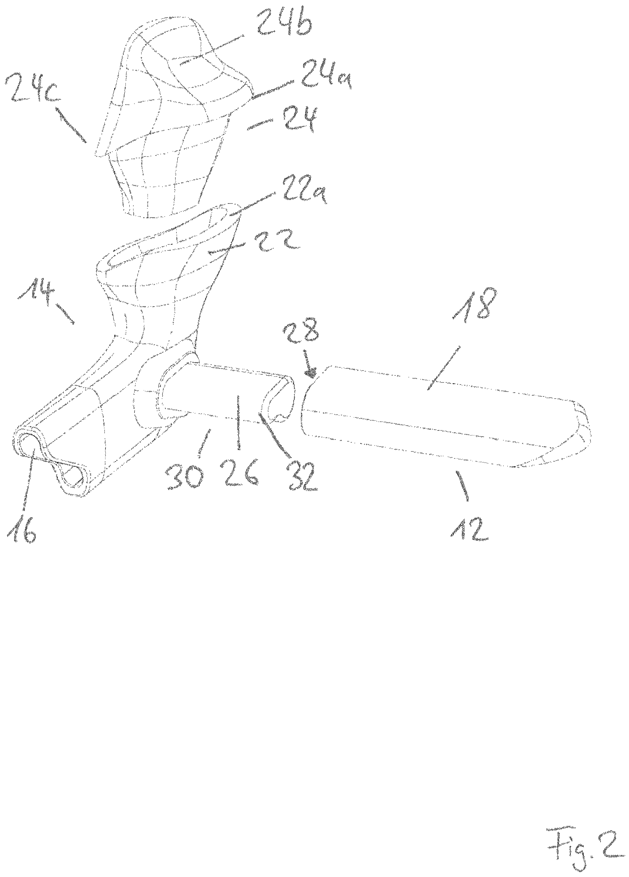

Weitere Details sind aus Fig. 2 ersichtlich.

Die Greifeinheitaufnahme 22 ist dabei im Wesentlichen kelchartig ausgebildet.

Der Greifeinheiteinsatz 24 wird dabei in die kelchartig ausgebildete Greifeinheitaufnahme 22 eingesetzt bzw. in ihr verrastet. Die Greifeinheitaufnahme 22 und der Greifeinheiteinsatz 24 greifen im montierten Zustand zumindest teilweise formschlüssig ineinander ein.

Die Einrichtung zum Befestigen an dem von Hand beweglichen Transportwagen 16 ist derart ausgebildet, dass sie auf einen entsprechenden Ansatz eines Transportwagens aufgesetzt werden kann. Dort kann entweder lediglich eine formschlüssige Befestigung oder eine formschlüssige Befestigung mit zusätzlicher Bolzenbefestigung, Vernietung oder Verschraubung vorgesehen sein. Grundsätzlich ist denkbar, dass die Einrichtung 16 zum Befestigen auf einem Teil eines Korbes oder eines Trägers des Fahrgestells des Transportwagens aufgesetzt wird.

Wie dies weiter aus Fig. 1 und Fig. 2 ersichtlich ist, ist jeder Griffabschnitt 18 durch die Querstrebe 12 ausgebildet und durch einen Vorsprung des Endstücks 14.

Die Endstücke 14 sind dabei aus Kunststoff, hier Polypropylen (PP) ausgebildet. Die Greifeinheitaufnahme 22 und der Greifeinheiteinsatz 24 können aus identischen Materialien aufgebaut sein. Dies ist jedoch nicht zwingend erforderlich, denkbar ist auch, dass die Greifeinheitaufnahme 22 und der Greifeinheiteinsatz 24, wie hier gezeigt, zumindest teilweise aus unterschiedlichen Materialien ausgebildet sind. So ist hier vorgesehen, dass die Greifeinheitaufnahme 22 ebenso wie das Endstück 14 aus Kunststoff ausgebildet sind, während der Greifeinheiteinsatz 24 teilweise aus einem Gummimaterial ausgebildet ist, um bessere Greifeigenschaften zu ermöglichen.

Der Greifeinheiteinsatz 24 weist eine umlaufende Aufsatzkante 24a aufweisen. Die Aufsatzkante 24a wiederum ist an den Rand 22a der Greifeinheitaufnahme angepasst. Hierdurch wird eine eindeutige Montagemöglichkeit für den Greifeinheiteinsatz bereitgestellt, da es nur eine Aufsatzmöglichkeit für den Greifeinheiteinsatz 24 und die zugehörige Greifeinheitaufnahme 22 gibt (rechte und linke Greifeinheit sind spiegelverkehrt ausgeführt), was die Montage und insbesondere auch eine korrekte Montage ermöglicht.

Des Weiteren weist der Greifeinheiteinsatz 24 eine Mulde 24b für die Auflage des Daumens auf.

Die Formgebung der Greifeinheit 20 ist insgesamt dergestalt, dass diese eine Griffmöglichkeit bieten, die an die Hände des Nutzers einer Schiebegriffeinheit angepasst sind. Denkbar sind auch Mulden für Finger, Ablageflächen, Einsenkungen für den Daumen und entsprechende Ausbuchtungen, die an die Handform des Benutzers angepasst sind. So ist insbesondere denkbar, dass eine gesonderte Auflagefläche 24c für den Handteller mit einer Ausbuchtung vorgesehen ist, die dann direkt auf der Handtellerinnenseite entsprechend aufliegen kann.

Insgesamt ist die Greifeinheit 20 ergonomisch angepasst, wobei die Gestaltung derart gewählt ist, dass sie sowohl für kleine als auch für große Hände passend ist und hierzu Höhe und Querschnitt entsprechend angepasst sind. Durch eine verbesserte Auflage der Hand und eine entsprechende ergonomische Ausgestaltung wird es auch möglich, einfacher Kräfte in die Greifeinheit 20 einleiten zu können. Durch die verbesserte Auflagemöglichkeit der Hand auf der Greifeinheit 20 wird es dem Benutzer erleichtert, auch einen schweren Einkaufswagen oder Transportwagen bewegen zu können.

Wie in Fig. 2 gezeigt, wird der Greifeinheiteinsatz 24 in die Greifeinheitaufnahme 22 eingesetzt. Hierdurch wird die Montage des Greifeinheiteinsatzes 24 in der Greifeinheitaufnahme 22 erleichtert. Greifeinheiteinsatz 24 und Greifeinheitaufnahme 22 sind aneinander angepasst.

Die Greifeinheit 20 ist im montierten Zustand, wie dies auch in Fig. 1 ersichtlich ist, in Richtung der Querstrebe 12 geneigt.

Beide Greifeinheiten 20 schließen im montierten Zustand mit der Querstrebe 12 einen Winkel ca. 60° bis ca. 75° ein.

Das Endstück 14 weist weiter einen Ansatz 26 auf, der in eine nicht näher gezeigte, aber für einen formschlüssigen Einsatz ausgebildete Ausnehmung 28 einsetzbar ist.

Der Ansatz 26 weist weiter eine Verdrehsicherung 30 auf, wobei die Verdrehsicherung 30 durch die Formgebung des Ansatzes 26 mit einer Nase 32 ausgebildet ist.

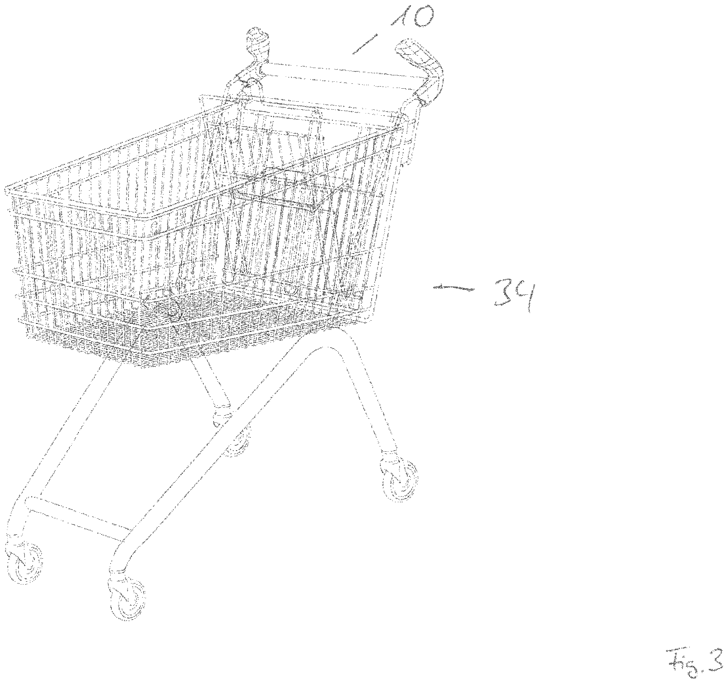

Fig. 3 zeigt in perspektivischer Darstellung die Schiebegriffeinheit 10 im montierten Zustand an einem Einkaufswagen 34.

Die Funktion der Schiebegriffeinheit 10 lässt sich wie folgt beschreiben:
Durch die Griffabschnitte 18 wird ein Schieben des nicht näher dargestellten Transportwagens dahingehend ermöglicht, dass dieser wie üblich mit horizontal aufgelegten Händen umgriffen und geschoben werden kann.

Durch die Greifeinheiten 20 wird insbesondere bei schwerer Beladung des Transportwagens ein leichteres Schieben und Ziehen des Transportwagens ermöglicht.

Dadurch, dass die Greifeinheiten 20 zweiteilig ausgebildet sind, nämlich durch die Greifeinheitaufnahme 22 und den Greifeinheiteinsatz 24 wird es ermöglicht, Teile der Greifeinheiten 20 bei Beschädigung leichter ersetzen zu können.

Darüber hinaus ist es möglich, eine bessere ergonomische Formgebung der Greifeinheiten 20 zu ermöglichen.

Außerdem ist es möglich, die Greifeinheiteinsätze 24 erst nach dem Transport zu montieren, wodurch der Transport erleichtert werden kann.

Bei Beschädigungen der Greifeinheiteinsätze 24 können diese auch unproblematisch ausgetauscht und ersetzt werden, ohne komplett die gesamte Schiebegriffeinheit 10 demontieren zu müssen.

Die Greifeinheitaufnahme 22 als auch der Greifeinheiteinsatz 24 bzw. das Endstück 14 können im Spritzgussverfahren hergestellt werden. Mögliche Materialien sind beispielsweise schlagzähe, spritzgießbare Kunststoffe wie Polypropylen (PP). Die spritzgießbaren Kunststoffe können faserverstärkt oder auch nicht faserverstärkt sein.

Fig. 4 zeigt in perspektivischer Ansicht ein weiteres Ausführungsbeispiel einer Schiebeeinheit 10', die alternativ an dem in Fig. 3 gezeigten Einkaufswagen 34 montiert werden kann.

Hier weist die Querstrebe 12'ein Mittelstück 13' auf, das als Münzpfandsystem 36' ausgebildet ist.

Das Münzpfandsystem 36' weist weiter ein Darstellungsfeld 38' auf, in dem Werbung eingeklipst werden kann.

Die Endstücke 14 mit der Greifeinheitaufnahme 22 und dem Greifeinheiteinsatz 24 sind identisch ausgebildet, wie bei dem in Fig. 1 bis 3 gezeigten Ausführungsbeispiel.

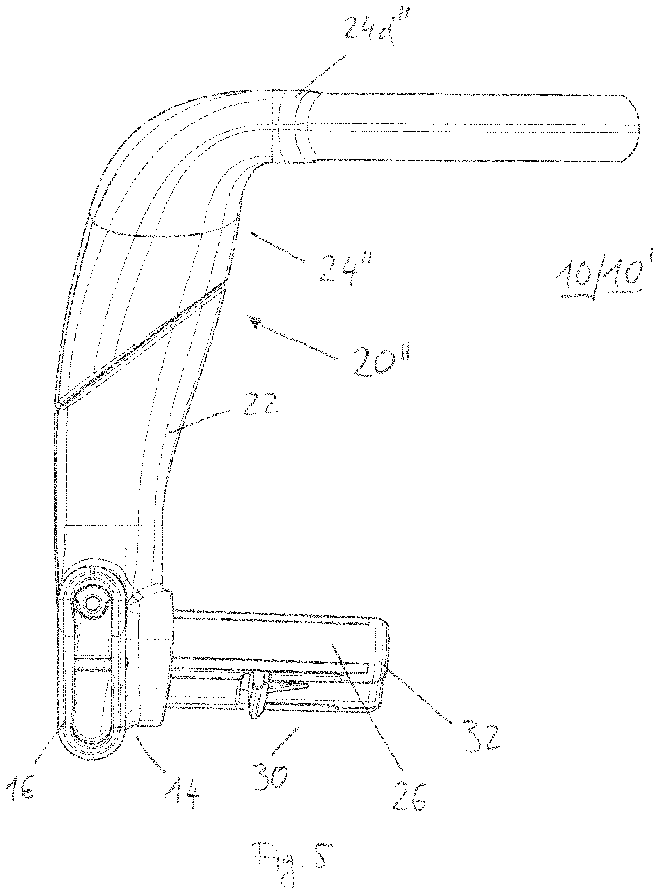

Fig. 5 zeigt eine perspektivische Frontansicht auf ein Ausführungsbeispiel einer erfindungsgemäßen Greifeinheit 20".

Das in Fig. 5 gezeigte Ausführungsbeispiel der Greifeinheit 20" weist im Wesentlichen dieselben strukturellen und funktionalen Merkmale wie die beiden in den Fig. 1 bis 4 gezeigten Ausführungsbeispiele der Greifeinheit 20 auf.

Lediglich die folgenden strukturellen Merkmale sollen aufgezeigt werden:
Die Greifeinheit 20" ist an dem einen Endstück 14 einstückig ausgebildet (nicht in Fig. 5 gezeigt).

An dem anderen Endstück 14 gemäß Fig. 5 besteht die Greifeinheit 20" aus der Greifeinheitaufnahme 22 und dem Greifeinheiteinsatz 24".

An dem Greifeinheiteinsatz 24" ist eine Objekthalterung 24d" einstückig ausgebildet, so dass der Greifeinheiteinsatz 24" mit der Objekthalterung 24d" einteilig, d.h. als ein Bauteil ausgebildet ist.

Die Objekthalterung 24d" besteht aus einem kreisringförmigen Strukturelement und einem bogenförmigen Strukturelement, welches den Greifeinheitseinsatz 24" mit der äußereren Oberfläche des kreisringförmigen Strukturelements einstückig verbindet.

Innerhalb des kreisförmigen Strukturelements kann ein Getränkebecher oder ein optisches Linsenelement angeordnet sein.

Die Objekthalterung 24" ist gemäß Fig. 5 ist als eine Halterung für einen Getränkebecher oder eine Lupe ausgebildet.

Alternativ kann die Objekthalterung 24" gemäß Fig. 5 auch als eine Halterung für einen Handscanner oder ein Handy oder ein Tablet oder einen Einkaufszettel ausgebilet sein.

Ferner kann die Objekthalterung 24d" auch als Haken oder Umlaufgriff oder Griffkappe ausgebildet sein.

Die Greifeinheit 20" kann ferner sowohl Bestandteil des Ausführungsbeispiels der Schiebegriffeinheit 10 gemäß Fig. 1 bis 3 als auch des Ausführungsbeispiels der Schiebegriffeinheit 10' gemäß Fig. 4 sein.

Die Greifeinheit 20" ist dabei an beide Endstücke 14 angeformt, die jeweils im montierten Zustand an den Enden der Querstrebe 12, 12' angeordnet sind und dort an die Querstrebe 12, 12' anschließen.

Die Endstücke 14 sind dabei mittels des Ansatzes 26 innerhalb der jeweiligen Ausnehmung 28 (siehe Fig. 2) der Querstrebe 12, 12' befestigt und mittels der Verdrehsicherung 30 bzw. der Nase 32 gegen ein Verdrehen gegenüber der Querstrebe 12, 12' gesichert.

Zusätzlich ist das Endstück 14 mittels der Einrichtung 16 an den Transportwagen 34 befestigt.

Dazu weist die Einrichtung 16 jeweils eine Tasche auf, welche formschlüssig mit einem jeweiligen Ansatz eines Transportwagens 34 zusammenwirkt bzw. jeweils in die Tasche einschiebbar ist und so mit diesem verbunden werden kann.

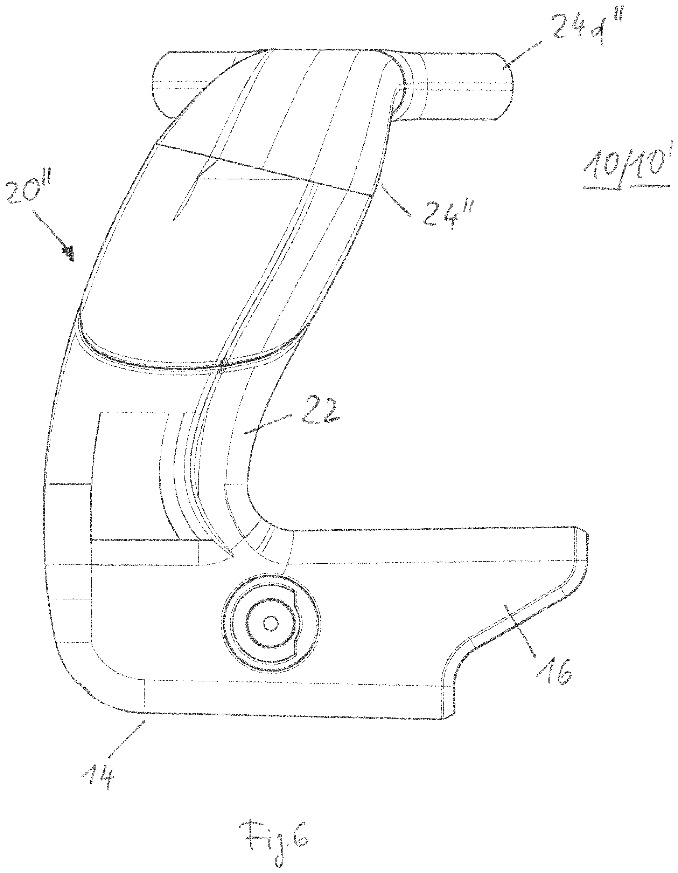

Fig. 6 zeigt eine perspektivische Seitenansicht auf das Ausführungsbeispiel der Greifeinheit 20" gemäß Fig. 5.

Darin ist ein Bolzen oder ein Stift mit axialer Fixierung dargestellt, mittels welchem die jeweilige Einrichtung 16 und der jeweilige Ansatz des Transportwagens 34 fixierbar sind.

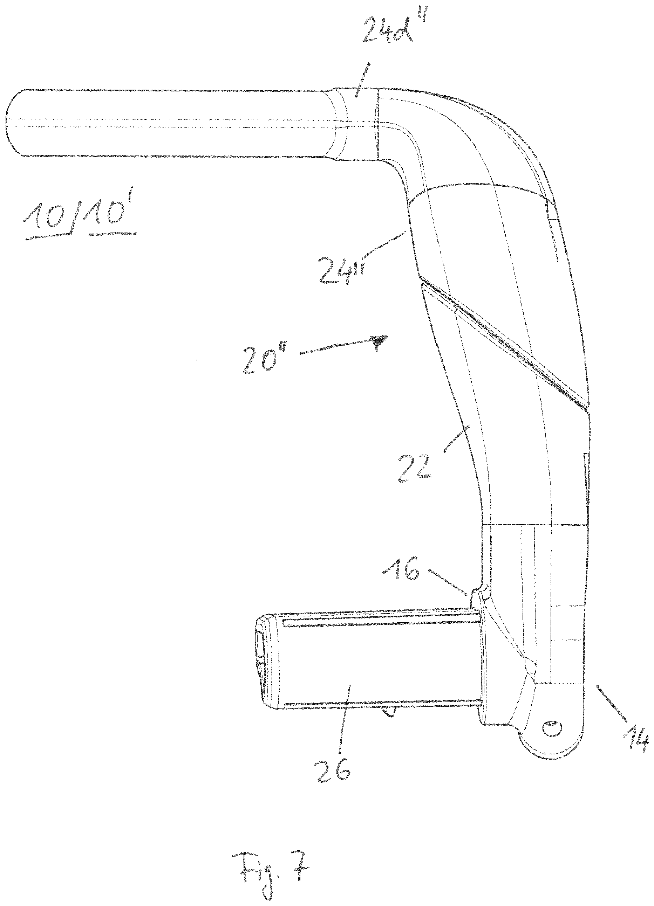

Fig. 7 zeigt eine perspektivische Rückansicht auf das Ausführungsbeispiel der Greifeinheit 20" gemäß Fig. 5.

Gemäß Fig. 7 ist eine ringförmige Ansatzfläche des Endstückes 14 gezeigt, an welcher das jeweilige Endstück 14 im montierten Zustand an den Enden der Querstrebe 12, 12' anschließt.

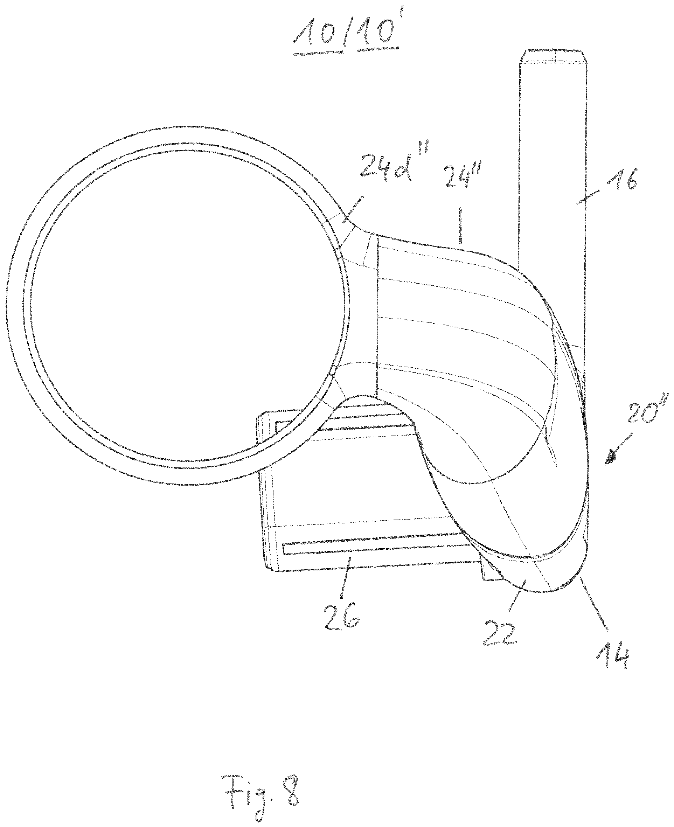

Fig. 8 zeigt eine perspektivische Oberansicht auf das Ausführungsbeispiel der Greifeinheit 20" gemäß Fig. 5.

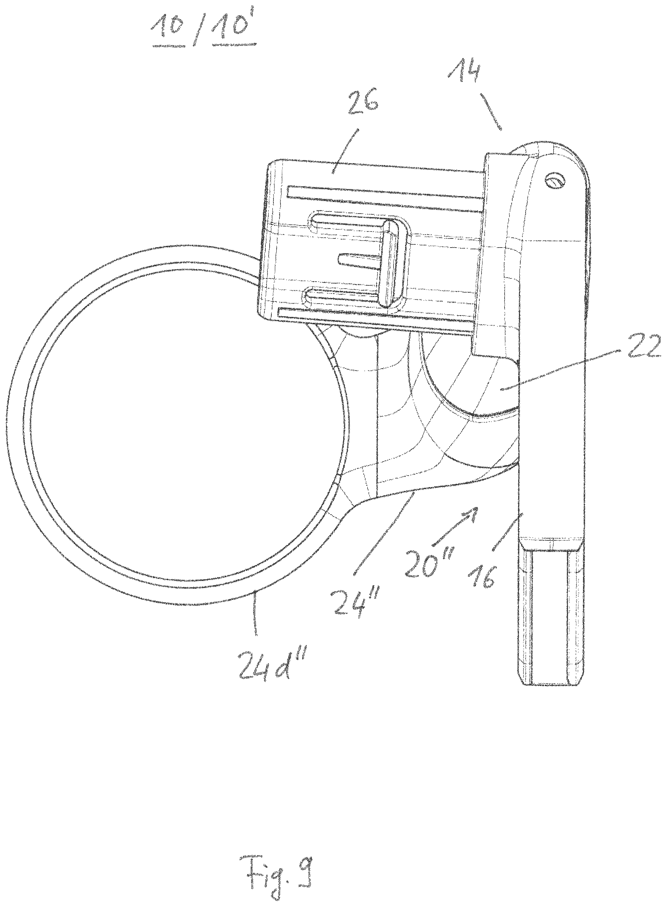

Fig. 9 zeigt ferner eine perspektivische Unteransicht auf das Ausführungsbeispiel der Greifeinheit 20" gemäß Fig. 5.

In den Fig. 8 und 9 ist der einstückige Übergang des kreisringförmigen Strukturelements und des bogenförmigen Strukturelements dargestellt.

Der einstückige Übergang ist zur Minderung der Kerbwirkung zwischen kreisringförmigem Strukturelement und bogenförmigem Strukturelement mit einem Radius versehen.

### Bezugszeichen

- 10: Schiebegriffeinheit
- 12: Querstrebe
- 14: Endstück
- 16: Einrichtung
- 18: Griffabschnitt
- 20: Greifeinheit
- 22: Greifeinheitaufnahme
- 22a: Rand
- 24: Greifeinheiteinsatz
- 24a: Aufsatzkante
- 24b: Mulde
- 24c: Auflagefläche
- 26: Ansatz
- 28: Ausnehmung
- 30: Verdrehsicherung
- 32: Nase
- 34: Einkaufswagen

- 10': Schiebegriffeinheit
- 12': Querstrebe
- 13': Mittelstück
- 18': Griffabschnitt
- 36': Münzpfandsystem
- 38': Darstellungsfeld

- 20": Greifeinheit
- 24": Greifeinheiteinsatz
- 24d": Objekthalterung

## Patentansprüche

1. Schiebegriffeinheit (10, 10') mit wenigstens einer Querstrebe (12, 12') und mit zwei im montierten Zustand an den Enden der überwiegend waagrechten Querstrebe (12, 12') angeordneten Endstücken (14), die eine Einrichtung (16) zum Befestigen an einem von Hand beweglichen Transportwagen (34) aufweisen, wobei die Schiebegriffeinheit (10, 10') an beiden Endstücken (14) jeweils eine freistehende, aufragende Greifeinheit (20) aufweist, wobei die Greifeinheit (20) jeweils wenigstens aus einer Greifeinheitaufnahme (22) und einem Greifeinheiteinsatz (24) besteht,
wobei der Greifeinheiteinsatz (24) in die Greifeinheitaufnahme (22) einsetzbar ist und wobei der Greifeinheiteinsatz (24) in der Greifeinheitaufnahme (22) verrastbar ist, und wobei die Greifeinheitaufnahme (22) und der Greifeinheiteinsatz (24) im montierten Zustand zumindest teilweise formschlüssig ineinandergreifen, die Greifeinheit (20) jeweils im montierten Zustand Richtung der Querstrebe (12,12') geneigt ist, und
**dadurch gekennzeichnet, dass** jeweils eine Greifeinheitaufnahme (22) an ein Endstück (14) angeformt ist und, wobei weiterhin das Endstück (14) einen Ansatz (26) aufweist in die Querstrebe (12,12') einsetzbar ist.

2. Schiebegriffeinheit (10, 10') nach einem der vorhergehenden Ansprüche, **dadurch gekennzeichnet, dass** der Greifeinheiteinsatz (24) zumindest abschnittsweise eine Aufsatzkante (24a) aufweist.

3. Schiebegriffeinheit (10, 10') nach einem der vorhergehenden Ansprüche, **dadurch gekennzeichnet, dass** an dem Greifeinheiteinsatz (24") eine Objekthalterung (24d") angeformt ist, insbesondere einstückig angeformt ist.

4. Schiebegriffeinheit (10, 10') nach Anspruch 3, **dadurch gekennzeichnet, dass** die Objekthalterung (24d") als eine Halterung für jeweils wenigstens einen Getränkebecher und/oder einen Handscanner und/oder ein Handy und/oder ein Tablet und/oder eine Lupe und/oder einen Einkaufszettel ausgebildet ist.

5. Schiebegriffeinheit (10, 10') nach Anspruch 3 oder Anspruch 4 **dadurch gekennzeichnet, dass** die Objekthalterung (24d") als Haken und/oder Umlaufgriff und/oder Griffkappe ausgebildet ist.

6. Schiebegriffeinheit (10, 10') nach einem der vorhergehenden Ansprüche, **dadurch gekennzeichnet, dass** die Greifeinheit (20") an dem einen Endstück (14) einstückig ausgebildet ist und dass Greifeinheit (20") an dem anderen Endstück (14) aus der Greifeinheitaufnahme (22) und dem Greifeinheiteinsatz (24) besteht, an dem die Objekthalterung (24d") angeformt ist, insbesondere einstückig angeformt ist.

7. Schiebegriffeinheit (10') nach einem der vorhergehenden Ansprüche, **dadurch gekennzeichnet, dass** die Querstrebe (12') ein Mittelstück (13') und zwei durch das Mittelstück (13') voneinander getrennte Griffabschnitte (18') aufweist.

8. Schiebegriffeinheit (10') nach Anspruch 7, **dadurch gekennzeichnet, dass** das Mittelstück (13') ein Münzpfandsystem (36') und/oder ein Darstellungsfeld (38') aufweist.

9. Schiebegriffeinheit (10, 10') nach einem der vorhergehenden Ansprüche, **dadurch gekennzeichnet, dass** jeder Griffabschnitt (18, 18') durch einen Vorsprung der Querstrebe (12, 12') und durch einen Vorsprung eines Endstücks (14) gebildet ist.

10. Schiebegriffeinheit (10, 10') nach einem der vorhergehenden Ansprüche, **dadurch gekennzeichnet, dass** das Endstück (14) aus Kunststoff ausgebildet ist.

11. Schiebegriffeinheit (10, 10') nach einem der vorhergehenden Ansprüche, **dadurch gekennzeichnet, dass** die Greifeinheitaufnahme (22) im Wesentlichen kelchartig ausgebildet ist.

12. Schiebegriffeinheit (10, 10') nach einem der vorhergehenden Ansprüche, **dadurch gekennzeichnet, dass** die Greifeinheitaufnahme (22) und der Greifeinheiteinsatz (24) zumindest teilweise aus unterschiedlichen Materialien ausgebildet sind.

13. Schiebeciriffeinheit (10, 10') nach Anspruch 1 **dadurch gekennzeichnet, dass** der Ansatz (26) eine Verdrehsicherung (30) aufweist.

14. Schiebegriffeinheit (10, 10') nach einem der vorhergehenden Ansprüche, **dadurch gekennzeichnet, dass** eine Greifeinheit (20) im montierten Zustand mit der Querstrebe (12, 12') einen Winkel im Bereich zwischen ca. 55° bis ca. 85°, insbesondere ca. 60° bis ca. 75° einschließt

15. Von Hand beweglicher Transportwagen mit wenigstens einer Schiebegriffeinheit (10, 10') nach einem der vorhergehenden Ansprüche.

## Claims

1. Push handle unit (10, 10') with at least one transverse strut (12, 12') and with two end pieces (14) which are arranged in the mounted state at the ends of the predominantly horizontal transverse struts (12, 12') and have a device (16) for fastening to a transport trolley (34) which can be moved by hand, the push handle unit (10, 10') having, at the two end pieces (14), in each case one free-standing, upwardly protruding gripping unit (20), the gripping unit (20) consisting in each case at least of a gripping unit receptacle (22) and a gripping unit in said (24), it being possible for the gripping unit insert (24) to be inserted into the gripping unit receptacle (22), and it being possible for the gripping unit insert (24) to be latched in the gripping unit receptacle (22), and the gripping unit receptacle (22) and the gripping unit insert (24) engaging at least partially into one another in a positively locking manner in the mounted state, the gripping unit (20) being inclined in the direction of the transverse strut (12, 12') in each case in the mounted state, and **characterized in that** in each case one gripping unit receptacle (22) is moulded onto an end piece (14) and, furthermore, the end piece (14) having an extension (26) which can be inserted into the transverse strut (12, 12').

2. Push handle unit (10, 10') according to one of the preceding claims, **characterized in that** the gripping unit insert (24) has an attachment edge (24a) at least in sections.

3. Push handle unit (10, 10') according to either of the preceding claims, **characterized in that** an object holder (24d'') is moulded, in particular is moulded in one piece, on the gripping unit insert (24").

4. Push handle unit (10, 10') according to Claim 3, **characterized in that** the object holder (24d") is configured as a holder for in each case at least one beverage cup and/or one handheld scanner and/or one mobile telephone and/or one tablet and/or one magnifying glass and/or one shopping list.

5. Push handle unit (10, 10') according to Claim 3 or Claim 4, **characterized in that** the object holder (24d") is configured as a hook and/or an encircling handle and/or a handle cap.

6. Push handle unit (10, 10') according to one of the preceding claims, **characterized in that** the gripping unit (20") is configured in one piece on the one end piece (14), and **in that** the gripping unit (20") on the other end piece (14) consists of the gripping unit receptacle (22) and the gripping unit insert (24), on which the object holder (24d") is moulded, in particular is moulded in one piece.

7. Push handle unit (10') according to one of the preceding claims, **characterized in that** the transverse strut (12') has a centre piece (13') and two handle portions (18') which are separated from one another by way of the centre piece (13').

8. Push handle unit (10') according to Claim 7, **characterized in that** the centre piece (13') has a coin deposit system (36') and/or a display field (38').

9. Push handle unit (10, 10') according to one of the preceding claims, **characterized in that** each handle portion (18, 18') is formed by way of a projection of the transverse strut (12, 12') and by way of a projection of an end piece (14).

10. Push handle unit (10, 10') according to one of the preceding claims, **characterized in that** the end piece (14) is configured from plastic.

11. Push handle unit (10, 10') according to one of the preceding claims, **characterized in that** the gripping unit receptacle (22) is of substantially cup-like configuration.

12. Push handle unit (10, 10') according to one of the preceding claims, **characterized in that** the gripping unit receptacle (22) and the gripping unit insert (24) are configured at least partially from different materials.

13. Push handle unit (10, 10') according to Claim 1, **characterized in that** the extension (26) has an anti-rotation safeguard (30).

14. Push handle unit (10, 10') according to one of the preceding claims, **characterized in that**, in the mounted state, a gripping unit (20) encloses an angle with the transverse strut (12, 12') in the range between approximately 55° and approximately 85°, in particular from approximately 60° to approximately 75°.

15. Manually movable transport trolley with at least one push handle unit (10, 10') according to one of the preceding claims.

## Revendications

1. Unité de poignée de poussée (10, 10') comprenant au moins un montant transversal (12, 12') et comprenant deux pièces d'extrémité (14) agencées à l'état monté aux extrémités du montant transversal (12, 12') principalement horizontal, qui présentent un dispositif (16) pour la fixation à un chariot de transport (34) mobile manuellement, l'unité de poignée de poussée (10, 10') présentant respectivement une unité de préhension (20) indépendante se dressant sur les deux pièces d'extrémité (14), l'unité de préhension (20) étant respectivement constituée d'au moins un logement d'unité de préhension (22) et d'un insert d'unité de préhension (24),
l'insert d'unité de préhension (24) pouvant être inséré dans le logement d'unité de préhension (22),
et l'insert d'unité de préhension (24) pouvant être encliqueté dans le logement d'unité de préhension (22), et le logement d'unité de préhension (22) et l'insert d'unité de préhension (24) s'engageant au moins partiellement l'un dans l'autre par complémentarité de forme à l'état monté,
l'unité de préhension (20) étant respectivement inclinée à l'état monté en direction du montant transversal (12, 12'),
**caractérisée en ce qu'**un logement d'unité de préhension (22) est formé respectivement sur une pièce d'extrémité (14) et, en outre, la pièce d'extrémité (14) présente un épaulement (26), qui peut être inséré dans le montant transversal (12,12').

2. Unité de poignée de poussée (10, 10') selon l'une quelconque des revendications précédentes, **caractérisée en ce que** l'insert d'unité de préhension (24) présente, au moins par sections, un bord rapporté (24a).

3. Unité de poignée de poussée (10, 10') selon l'une quelconque des revendications précédentes, **caractérisée en ce qu'**un support d'objet (24d") est formé sur l'insert d'unité de préhension (24"), notamment est formé d'un seul tenant.

4. Unité de poignée de poussée (10, 10') selon la revendication 3, **caractérisée en ce que** le support d'objet (24d") est réalisé sous la forme d'un support pour respectivement au moins un gobelet de boisson et/ou un scanner à main et/ou un téléphone portable et/ou une tablette et/ou une loupe et/ou une liste de courses.

5. Unité de poignée de poussée (10, 10') selon la revendication 3 ou la revendication 4, **caractérisée en ce que** le support d'objet (24d") est réalisé sous forme de crochet et/ou de poignée périphérique et/ou de capuchon de poignée.

6. Unité de poignée de poussée (10, 10') selon l'une quelconque des revendications précédentes, **caractérisée en ce que** l'unité de préhension (20") est réalisée d'un seul tenant à l'une des pièces d'extrémité (14) et **en ce que** l'unité de préhension (20") est constituée à l'autre pièce d'extrémité (14) du logement d'unité de préhension (22) et de l'insert d'unité de préhension (24), sur lequel est formé le support d'objet (24d"), notamment formé d'un seul tenant.

7. Unité de poignée de poussée (10') selon l'une quelconque des revendications précédentes, **caractérisée en ce que** le montant transversal (12') présente une pièce centrale (13') et deux sections de poignée (18') séparées l'une de l'autre par la pièce centrale (13').

8. Unité de poignée de poussée (10') selon la revendication 7, **caractérisée en ce que** la pièce centrale (13') présente un système de consignation (36') et/ou un panneau de présentation (38').

9. Unité de poignée de poussée (10, 10') selon l'une quelconque des revendications précédentes, **caractérisée en ce que** chaque section de poignée (18, 18') est formée par une saillie du montant transversal (12, 12') et par une saillie d'une pièce d'extrémité (14).

10. Unité de poignée de poussée (10, 10') selon l'une quelconque des revendications précédentes, **caractérisée en ce que** la pièce d'extrémité (14) est réalisée en matière plastique.

11. Unité de poignée de poussée (10, 10') selon l'une quelconque des revendications précédentes, **caractérisée en ce que** le logement d'unité de préhension (22) est réalisé essentiellement en forme de calotte.

12. Unité de poignée de poussée (10, 10') selon l'une quelconque des revendications précédentes, **caractérisée en ce que** le logement d'unité de préhension (22) et l'insert d'unité de préhension (24) sont réalisés au moins partiellement en des matériaux différents.

13. Unité de poignée de poussée (10, 10') selon la revendication 1, **caractérisée en ce que** l'épaulement (26) présente un moyen de blocage en rotation (30).

14. Unité de poignée de poussée (10, 10') selon l'une quelconque des revendications précédentes, **caractérisée en ce qu'**une unité de préhension (20), à l'état monté, forme avec le montant transversal (12, 12') un angle dans la plage allant d'environ 55° à environ 85°, notamment d'environ 60° à environ 75°.

15. Chariot de transport mobile manuellement comprenant au moins une unité de poignée de poussée (10, 10') selon l'une quelconque des revendications précédentes.
